Europäisches Patentamt

European Patent Office

Office européen des brevets

(19)

(11) Publication number: **0 041 381**

**A1**

(12) # EUROPEAN PATENT APPLICATION

(21) Application number: 81302391.8

(22) Date of filing: 01.06.81

(51) Int. Cl.³: **H 01 B 1/12**
**H 01 L 29/28, B 64 G 1/58**

(30) Priority: 02.06.80 GB 8018037

(43) Date of publication of application:
09.12.81 Bulletin 81/49

(84) Designated Contracting States:
DE FR GB IT NL

(71) Applicant: BRITISH AEROSPACE PUBLIC LIMITED
COMPANY
100 Pall Mall
London SW1Y 5HR(GB)

(72) Inventor: Fellas, Christakis Nicolaou
72, Bradmore Green
Hatfield Hertfordshire AL9 7QT(GB)

(74) Representative: Dowler, Edward Charles et al,
British Aerospace Public Limited Company Corporate
Patents Department Brooklands Road
Weybridge Surrey, KT13 OSJ(GB)

(54) Altering the electro-conductive properties of material.

(57) The electrical conductivity of dielectric material such as sheet plastics material is permanently enhanced by irradiation with electrons at substantial energy and density. Sheet plastics material with its conductivity enhanced by this method may be used as a thermal blanket for a spacecraft.

EP 0 041 381 A1

TITLE:  ALTERING THE ELECTRO-CONDUCTIVE
PROPERTIES OF MATERIAL.

Thermally-insulating material is normally also electrically insulating.  This causes a particular problem in the field of spacecraft where sheets of material such as Kapton and Teflon (registered trade marks) are used as thermal blankets on outer surfaces of the craft.  Kapton and Teflon have good thermo-optical properties,  heat absorbance and emittance, for this application but objects in space are subject to a continuous bombardment of high energy electrons. Because of the electrical insulation properties of the materials, this bombardment results in very high voltage capacitive charges being built up in the surface layers of the materials and the voltage may eventually exceed the breakdown potential of the material.  At this level, arc discharges through the material may occur and consequent interference with the electronic equipment carried on board the craft.

According to one aspect of the invention, there is provided a method of altering the electrical conductivity of dielectric material comprising bombarding the material with electrons having sufficient energy to penetrate right through it.

According to another aspect of the invention, there is provided an article comprising dielectric material which has been irradiated with sufficient electrons at a sufficient energy to produce an increase in the electrical conductivity of the material, which increase remains after the irradiation.

The dielectric material may be a polymer plastics material such as Kapton and may form one layer of a composite sheet comprising also one or more layers of conductive material such as aluminium.

According to a third aspect of the invention, there is provided a spacecraft having attached thereto an article, such as a thermal blanket, which comprises a polymer plastics material, the material having been irradiated by sufficient electrons at a sufficient energy to produce an increase in the electrical conductivity of the material, which increase remains after the irradiation.

According to a fourth aspect of the invention, there is provided a thermal insulator of which the electrical leakage therethrough has been increased sufficiently to prevent substantial build-up of electrical charge thereon, the increase being achieved by irradiating the insulator with high-energy electrons.

According to a fifth aspect of the invention, there is provided a thermal blanket in or for a spacecraft, the blanket including a sheet of polymer plastics material such as Kapton (Registered Trade Mark) which, to limit the voltage of capacitive charges induced on the blanket by electron bombardment in space, has been artificially pre-bombarded with electrons in an electron accelerator for example.

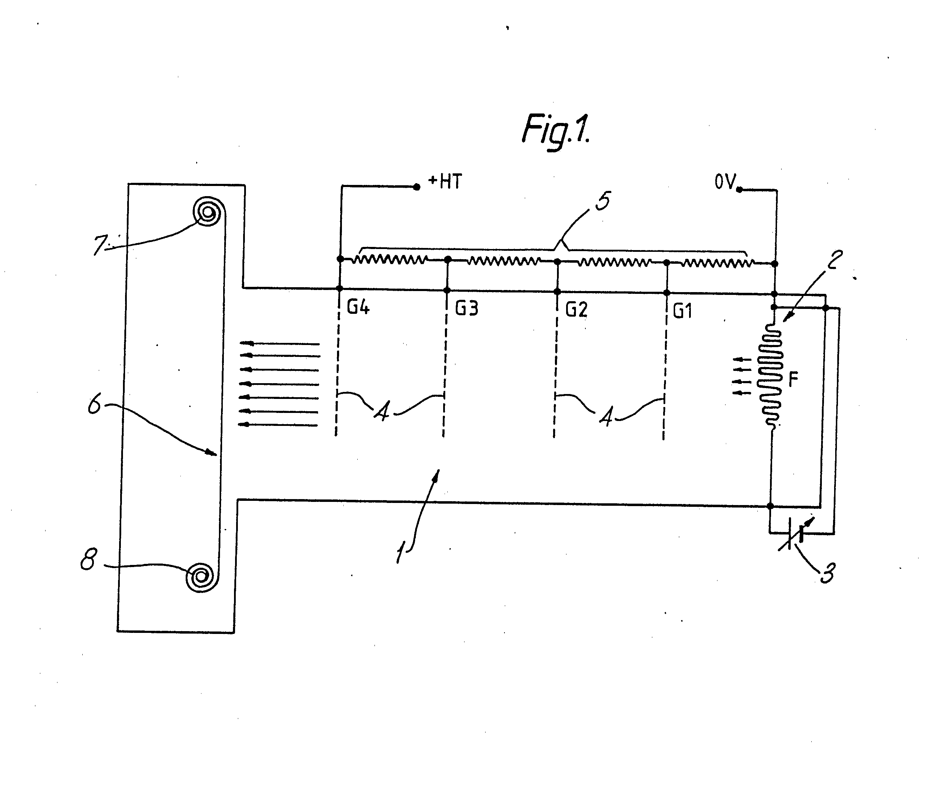

For a better understanding of the invention and to show how the same may be carried into effect reference will now be made, by way of example, to the accompanying drawing, figure 1 of which is a diagrammatic sectional view of apparatus for altering the electro-conductive properties of a roll of dielectric material, and

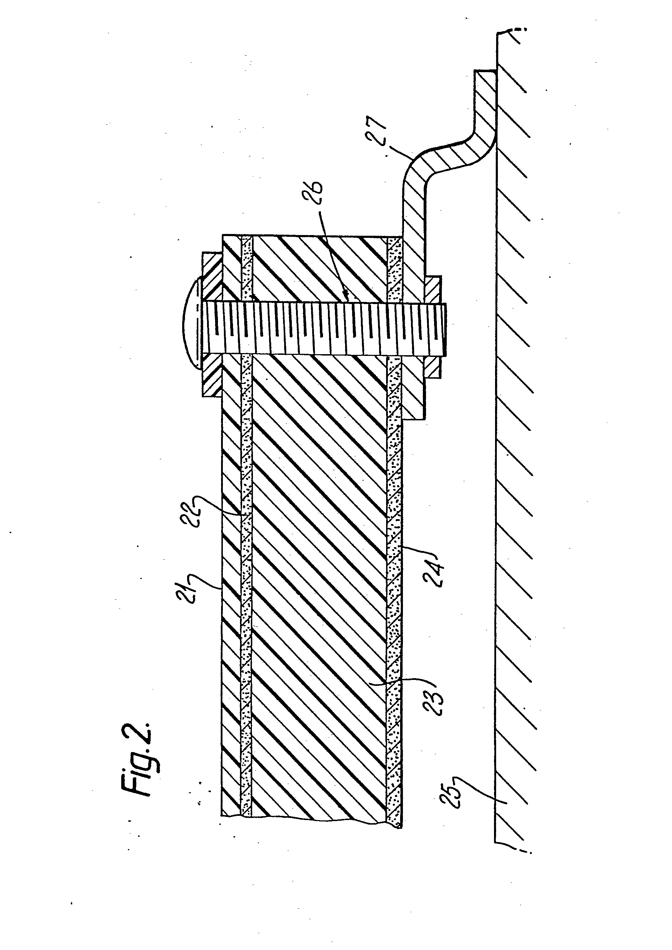

figure 2 is a diagrammatic view of part of a spacecraft and a thermal blanket therefor.

During studies in which sheets of dielectric plastics material having different thicknesses were bombarded with electrons, it was noted that the leakage current flowing through thin sheets due to the bombardment was higher than that flowing through the thicker sheets to a degree greater than that which would be expected merely from the reduction in thickness. It was further noticed that, after irradiation, a substantial increase in conductivity had occurred.

It is believed that, as an electron moves through dielectric material, it encounters a series of potential energy wells divided by potential barriers. In order to progress, the electron must have sufficient energy to overcome these barriers. When the material is irradiated with electrons having sufficient energy for them to penetrate right through the thickness of the material, tunnels are created in the barriers. The size of these is determined by the electron wavelength and they may be thought of as cylindrical conduction tunnels of diameter approximately $2.4 \times 10^{-10}$ cm. which is substantially less than the interatomic distances in the materials in question. Thus, they do not affect the mechanical and thermal properties of the material.

Thus, in this invention, an increase in the electrical conductivity of materials such as Kapton, is produced by irradiating the material with sufficient density of high energy electrons to produce that alteration. To do this, there may be used any electron accelerator able to provide a large enough electron current and enough electron energy for the penetration range of the electrons to exceed the thickness of the material. For example, there could be used apparatus such as that shown in the drawing where a vacuum chamber 1 is provided with a filament arrangement 2 at one end. The filament is heated by current from a variable high-current source 3 to produce a controllable thermionic electron cloud. Electrons from the filament 2 are accelerated by a series of grids 4, fed with successively higher positive potentials by a continuously variable H.T. supply and a potentiometer arrangement 5. The supplies to the grids 4 and the filament arrangement 2 are led into the vacuum chamber 1 via suitable vacuum-tight feed-throughs. A roll of dielectric material 6

- 5 -

such as Kapton is carried on a feed roller 7 at the other end of the chamber 1 and is reeled through the path of the electrons to a receiving roller 8. The speed with which the Kapton 6 is moved, the number of grids 4 and the H.T. supply voltage are adapted to ensure that the Kapton is fully penetrated by a sufficient flux of electrons to give the required alteration of the electro-conductive properties.

The material 6 may be a composite sheet material comprising for example a 3 mil layer of Kapton attached to a 1 mil layer of aluminium. To achieve penetration of this thickness of Kapton by the electrons, the electron energy should be around 150 KeV. For a 75 micron thick sheet of Kapton, the energy required would be around 105 KeV.

The resultant treated sheet may be used as a thermal blanket for a spacecraft for example.

It will be appreciated that the invention is not limited to the spacecraft field but can be used say for other applications where a low thermal conductivity material with enhanced electrical conductivity might be useful. For example, such material might be useful for printed circuit boards, containers for dangerous liquids or explosives (to reduce the possibility of charge build-up and subsequent spark discharges), screens for reducing electromagnetic interference between electronic components and so on.

It will be appreciated that, as well as Kapton, the invention may also be used to alter the electro-conductive properties of other materials such as Teflon and glass. Like Kapton, Teflon and glass may also be used as thermal control materials for spacecraft.

It will be appreciated that, in order to achieve a worthwhile reduction in electrical conductivity, the electron current has to be of sufficient density as well as being applied at sufficient voltage. It has been found that, for plastics material sheet having a thickness of 0.25 thousandths of an inch, an electron current density of 35 nA/cm$^2$ at a voltage of 30 KeV is suitable.

B.N. Suppa Rao showed, in "Nuclear Instruments and Methods" No. 44 (1966) Page 155, that the probability that an electron with kinetic energy T will survive over a distance S inside a particular material is given by the expression:-

$$P\ (T) \quad = \quad \frac{1 + \exp.\ (-\ GH)}{1 + \exp.\ \left\{ G\ .\ \dfrac{S(T)}{R(T)}\ -\ H \right\}}$$

where S and H are constants associated with the material and R is the maximum distance that one electron might reach. For a plastics material, P (T) = 0.02 for S/R = 1, i.e. only 2% of electrons incident on the material will survive to reach the maximum distance that electrons could reach therein.

The above expression enables the values of electron current density and voltage suitable for this invention to be obtained for various kinds and thicknesses of material from the above-mentioned values for 0.25 thousandths of an inch thick plastics material.

As mentioned earlier, the material 6 may be a composite sheet material. Also, it may be a single sheet of plastics material such as Kapton which is later made part of a composite sheet by the addition of one or more other layers, for example including a backing layer of aluminium. As shown in figure 2, the composite sheet could comprise an upper thin plastics layer 21, then a thin conductive layer 22 which could be of aluminium but is preferably transparent material such as indium tin oxide or a conductive material filled transparent adhesive, then a thicker plastics material layer 23, and then a conductive backing layer 24 of aluminium say. For use as a spacecraft thermal blanket, the backing layer, and the intermediate conductive layer if present, is or are electrically connected to the spacecraft structure 25 as shown, via nut and bolt 26 and conductor strap 27.

CLAIMS:

1.     An article comprising dielectric material which has been irradiated with a sufficient density of electrons at a sufficient energy to produce an increase in the electrical conductivity of the material, which increase remains after the irradiation.

2.     An article according to Claim 1, wherein the material is a sheet of polymer plastics material.

3.     An article according to Claim 2, wherein said sheet forms one layer of a composite sheet comprising also one or more layers of conductive material.

4.     An article according to Claim 3, wherein said conductive material is aluminium.

5.     An article according to Claim 3, wherein the sheet includes one layer of conductive material which is transparent.

6.     A spacecraft having attached thereto a thermal blanket comprising a backing layer of electrically conductive material (24) which electrically conductive material is electrically connected to the spacecraft structure (25) and an outer layer of polymer plastics material (21,23) of which the electrical conductivity has been enhanced at least sufficiently to limit the build-up of electrical charge on and in the layer by pre-irradiating the material

- 2 -

0041381

with electrons having sufficient energy and at a sufficient current density to produce said increase in conductivity.

Fig.1.

Fig.2.

| Category | Citation of document with indication, where appropriate, of relevant passages | Relevant to claim |
|---|---|---|
| | US - A - 3 249 830 (ADANY) + Column 1, line 41 - column 3, line 29 + | 1,2 |
| | -- | |
| | US - A - 3 390 012 (HABERECHT) + Abstract; fig. 4 + | 1 |
| | -- | |
| L | O.A. NEUMÜLLER "Römpps Chemie-Lexikon", 7thedition, vol. 3, 1973 FRANCKH'SCHE VERLAGSHANDLUNG, Stuttgart pages 1720-1721 + Catchword "Kapton" + | |
| | ---- | |

## DOCUMENTS CONSIDERED TO BE RELEVANT

**CLASSIFICATION OF THE APPLICATION (Int. Cl.³)**

H 01 B  1/12
H 01 L 29/28
B 64 G  1/58

**TECHNICAL FIELDS SEARCHED (Int. Cl.³)**

H 01 B  1/00
H 01 B  3/00
H 01 B 13/00
H 01 L 21/00
H 01 L 29/00
B 64 G  1/00
B 64 C  1/00
C 08 J  7/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X  The present search report has been drawn up for all claims

| Place of search | Date of completion of the search | Examiner |
|---|---|---|
| VIENNA | 25-08-1981 | KUTZELNIGG |